# EUROPEAN PATENT APPLICATION

(11) **EP 1 755 040 A1**
(43) Date of publication of application: **21.02.2007**
(21) Application number: 05107621.4
(22) Date of filing: 19.08.2005
(51) Int. Cl.: G06F 9/46

(54) **Status information recording**

(71) Applicant: Agilent Technologies, Inc., Santa Clara, CA 95051 (US)
(72) Inventor: Bouzid, Iwan, 76133 Karlsruhe (DE)
(74) Representative: Barth, Daniel Mathias

(57) **Abstract**

For recording status information of a computer controlled device (1), a given number of data of said device is recorded on an initiating event, said data being indicative of a current status of said device (1). An output file comprising said recorded data is generated.

## Description

### BACKGROUND ART

The present invention relates to computer controlled devices.

### DISCLOSURE

It is an object of the invention to improve computer controlled devices. The object is solved by the features of the independent claims. Exemplary embodiments are shown by the dependent claims.

According to embodiments of the present invention, status information of a computer controlled device is recorded on an initiating event. The term device can comprise at least one of an analyzer, a measuring device, a checking device, an indicator, a sensor, an instrument, a measuring tool. The device is preferably adapted for at least one of measuring, analyzing and recording at least one of a physical, chemical, biological etc. characteristic and/or property of a device, system, substance such as a fluid, etc. The term computer controlled device might comprise a device with an embedded computer or with an embedded processing unit as well as a device controlled by an internal and/or external computer. Computer controlled devices may incorporate a number of components to provide increased functionality. The increasing density of components, the high degree of integration of circuits in a device and the huge variety of their functions has greatly increased the difficulty of testing such devices with conventional external testing machines or methods designed for this purpose.

According to embodiments of the present invention, data concerning status information of the device is recorded on an initiating event. This can be for instance a user request, an error and/or a defect of the device, and/or an undesirable working condition of the device. In case of the initiating event, the status information can be recorded automatically without an action of the user. The status information can for instance be used to improve the processing of the device or to reveal the reason for a defect or a special working condition of the device subsequent to the time the defect or another initiating event occurred. Thus embodiments of the invention provide a useful tool to interpret certain conditions of the device.

The status information might include data being indicative of a current configuration of the device. Current configuration data of all or most of the components, parts or modules of a device is usually already included in the device. Embodiments of the invention allow to record and/or store such current configuration data, so that access to such data can be provided, e.g. even after the device has been shut down. Recording such data over a long period of time, thus generating a huge amount of data, can be avoided.

In accordance with a preferred embodiment, a configuration file defines the number and the type of data included in the status information. This configuration file can be stored in a storage unit e.g. of the computer controlling the device. Thus the status information supplies only the relevant data for the initiating event. This reduces the amount of data and simplifies the analysis for the user.

According to an embodiment, the data recorded as a status information can be supplied by any communication channel of the device.

According to another embodiment, the configuration file comprises information about different types and/or versions of devices thus allows independence of certain versions or types of the devices.

According to a further embodiment, the system is self-learning. A process can be initiated for analyzing and controlling the configuration file to improve its capability in supplying the relevant data based e.g. on information received, new instructions received, results of calculations or environmental change.

In accordance with a preferred embodiment, a report can be generated for the recorded data. The report supplies the data in a format which is easier to understand or to interpret than the data itself especially if the user is not an expert.

According to a further embodiment, a fluid separation system adapted for separating compounds of a fluid comprises a fluid delivering unit adapted for delivering the fluid, a separation unit adapted for separating compounds of the fluid, a computer adapted for controlling said fluid separation system and a system for recording status information of said fluid separation system on an initiating event. Fluid separation systems are for instance used in liquid chromatography or electrophoresis applications. The fluid delivering unit and the separation unit may comprise a number of parts including for example valves and a pump. All parts are controlled by a computer for parallel processing of commands taking into account multiple interrupt sources and synchronizing concepts. Usually separated data and command channels are used for specific data handling and data transfer. Different kind of data is for instance raw analysis data, which might have to be transferred fast, diagnostic buffer containing the history of processes, counters, actuals, direct commands, specific formats. Embodiments according to the invention provide an easy, flexible and fast way for producing debugging lists in case of incorrect processing of a job of one or more parts of the fluid separation system. This information can not only be used to detect the reason for the incorrect processing but also for the further development and improvement of the fluid separation system. Moreover special real-time measure routines can be handled automatically.

Embodiments can be partly or entirely embodied or supported by one or more suitable software programs, which can be stored on or otherwise provided by any kind of data carrier, and which might be executed in or by any suitable data processing unit. Software programs or routines are preferably applied on computer controlling devices like for instance a fluid separation unit.

### BRIEF DESCRIPTION OF DRAWING

Other objects and many of the attendant advantages of embodiments of the present invention will be readily appreciated and become better understood by reference to the following more detailed description of embodiments in connection with the accompanied drawing. Features that are substantially or functionally equal or similar will be referred to by the same reference signs.

Fig. 1 shows a schematic diagram of an embodiment of the instant invention.

Fig. 2 shows a schematic diagram depicting the succession of actions of the embodiment of Fig. 1.

Fig. 3 shows four different event states of a component of a module of the embodiment of Fig. 1.

Fig. 4 shows a flow chart of the method applied to the embodiment of Fig. 1.

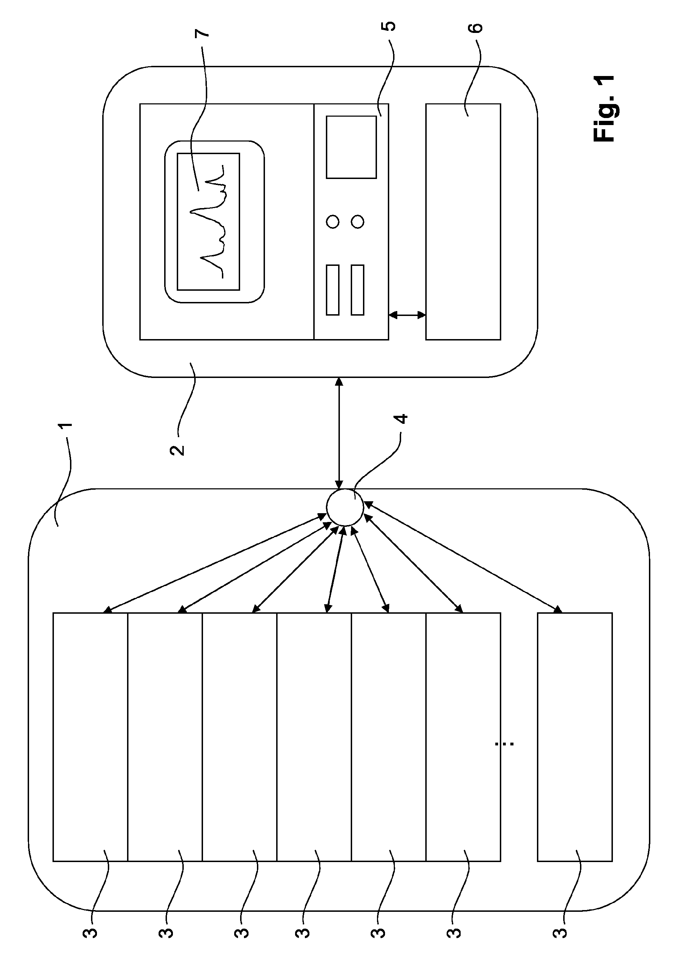

Fig. 1 is a schematic diagram of a device 1 controlled by a controlling unit 2, which might be part of or external to the device 1. The device 1 can comprise a number n of modules 3. Each module 3 might contain e.g. its own microprocessor, its own data, its own operation system and its own mechanical and/or electrical components. Each module 3 may have its own set of instructions resulting from of its tasks. A sequence to drive the device 1 might include a complete set of instructions of all modules 3. The instructions of the sequence are synchronized. Each module 3 can communicate with the controlling unit 2 via a central access point 4. The modules 3, the central access point and the controlling unit can be connected to each other wireless and/or wired e.g. via data lines of a LAN. The device 1 and the controlling unit can be located in close physical proximity (e.g. stand virtually next to each other) but can also be located remote to each other e.g. separated and located in different places. The controlling unit 2 can comprise a computer 5, a database 6 and a display 7.

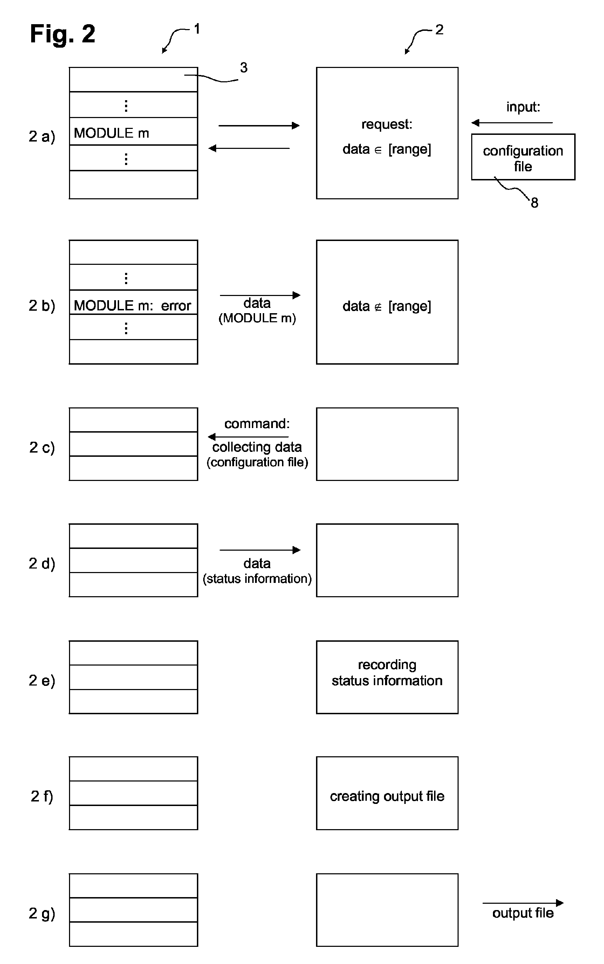

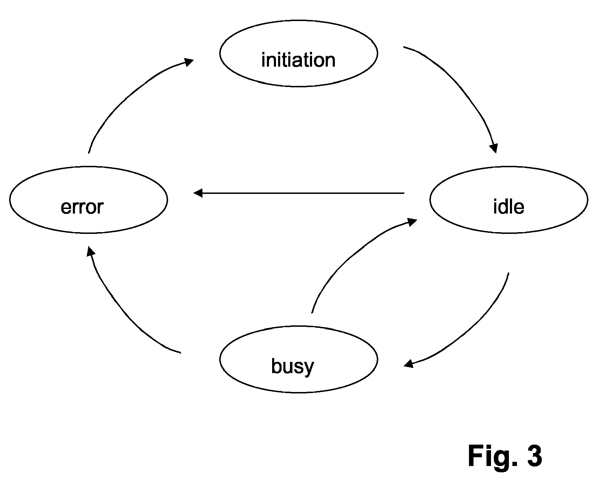

Fig. 2 shows a schematic diagram depicting the succession of actions of the embodiment of Fig. 1. A configuration file 8 comprises information about different types or versions of the device 1 and is input into the controlling unit 2. The configuration file further comprises a definition for a number and type of parameters to be collected and recorded as data of one or more modules 3 on an initiating event. Number and type of data to be collected can be defined by the user. They might be different for different initiating events. The configuration file might also include the commands to collect and record the data. In a normal operation modus, i.e. as long as no error occurs, according to Fig. 2a), data can be exchanged between the device 1 and the controlling unit 2. The data can comprise for instance instructions, information about an event as shown in Fig. 3 of a mechanical or electrical component of a module 3, parameters of the modules 3, and/ or history information about the modules 3. The controlling 2 unit checks if the data transferred from the module(s) 3 of the device 1 is in a given range. The range comprises for instance valid instructions, information about a busy or idle state of a mechanical or electrical component of the modules 3 as shown in Fig. 3, parameters of the modules 3 connected to an intended working condition or a normal operation modus, parameters given by a user. The device 1 is usually running without a user's attention. All processes of the different modules are typically synchronized.

If the data transferred from one of the modules 3 of the device 1, further referred to as module m, to the controlling unit 2 is not included in the given range, an initiating event is given. This can be for instance an error or a defect of a mechanical or electrical component of the module m as shown in Fig. 3, a parameter of module m connected to an unintended or invalid working condition or a parameter defined by a user. This is shown in Fig. 2b). The sequence including a complete set of instructions of all modules 3 of the device 1 is aborted and all analysis processes are stopped or reset. The device 1 might show an error state on a status display 7. On this initiating event the controlling unit 2 gives an instruction to the device 1 to collect data of module m and also of other modules 3 of the device 1 according to a given definition in the configuration file 8. This is shown in Fig. 2c). The data is collected to be indicative of the current status (e.g. when the initiating event occurred) of said device 1 and shall be referred to as "status information" in Fig. 2d). The status information is recorded in the controlling unit 2, as shown in Fig. 2e), and an output file including the status information is generated as shown in Fig. 2f). The output file can be transferred to a user, another computer or any other output system, as depicted in Fig. 2g).

Data concerning events can comprise information events or state change events, for instance. In an example, four different states of a motor which can be part of a module 3 of the device 1 are shown in Fig. 3. In a first state named initiation the motor is initiated. In a second state named idle the motor is idle and expects instructions to be transferred to a busy state named busy. In a normal operation modus the motor changes between the idle state and the busy state according to the instructions of the controlling unit. If an error occurs the motor gets into a fourth state named error. After the cause for the error is eliminated the motor is initiated and can now be transferred to the idle state again.

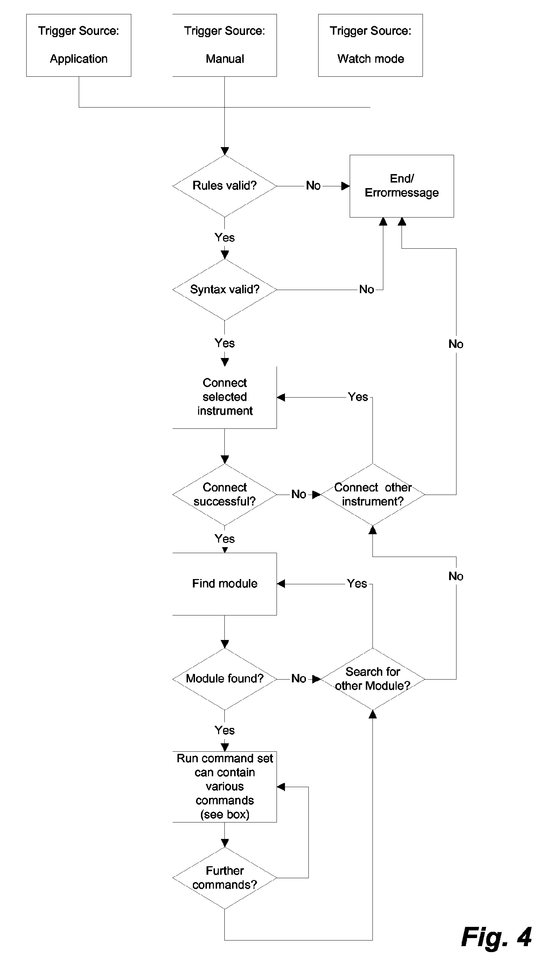

Fig. 4 shows a flow chart of the method applied to the embodiment of Fig. 1 including the succession of actions according to Fig. 2. A trigger is generated by different trigger sources on an initiating event for instance manual by a user, by application or by the controlling unit 2 if an error occurs in one of the modules 3 of the device 1. This trigger source is named watch mode in Fig. 4. If a trigger is active the rules of the method are checked in a first step. If they are valid the syntax of the method is checked in a second step. If rules or syntax are not valid the method ends. If both are valid a selected device 1 or instrument is connected. In case the connection is not successful another device is connected. In case the connection is successful a module 3 is determined which is related to the initiating event. This module is named module m in Fig. 2. The relation can be for instance an error in module m, a user request or an undesired working condition of module m. If module m is not found other modules 3 are investigated. If no module is found another device is connected. If the module m is found a command set with various commands is started to collect and record a given number of data of module m and other modules 3 of the device 1 by the controlling unit 2. The analysis of the method comprises rule verification, syntax parsing and the check of the connection to one or several modules 3 of the device 1. According to a command set data is collected and an output file is generated.

## Claims

1. A method for recording status information of a computer controlled device (1) comprising:
on an initiating event recording a given number of data of said device (1), said data being indicative of a current status of said device (1),
generating an output file comprising said recorded data.

2. The method of claim 1, comprising a configuration file (8) having at least one of the following features:
the configuration file (8) defines the number and the type of said data.
the configuration file (8) comprises information about different types or versions of devices (1).

3. The method of claim 2, comprising at least one of the following features:
the configuration file (8) is stored in a storage unit of preferably said computer (5) controlling said device (1);
initiating a process for analyzing and controlling the configuration file (8).

4. The method of claim 1 or any one of the above claims wherein the initiating event is at least one of the following events: a user request, an error or a defect of the device (1).

5. The method of claim 1 or any one of the above claims comprising checking if the device (1) is in an intended working condition, wherein an invalid working condition represents an initiating event.

6. The method of claim 1 or any one of the above claims comprising delivering said output file to an output unit.

7. A system for recording status information of a computer controlled device (1) comprising
a recording unit (5) adapted for recording, on an initiating event, a given number of data of said device (1), said data being indicative of a current status of said device (1), and for generating an output file comprising said recorded data.

8. The system of claim 7 comprising a query unit for activating said recording unit(5) if an intended working condition of said device (1) is not valid, wherein said invalid intended working condition represents an initiating event.

9. The system of claim 7 or any one of the above claims, comprising at least one of the following features:
an input unit for entering a request as an initiating event;
output unit (7) for delivering said output file to a user;
a storage unit (6) for storing a configuration file (8) defining a number and a type of data being indicative of a current status of said device (1).

10. A software program or product, preferably stored on a data carrier, for controlling or executing the method of claim 1 or any one of the above claims, when run on a data processing system such as a computer (5).

11. A fluid separation system adapted for separating compounds of a fluid, comprising:
- a fluid delivering unit (3) adapted for delivering the fluid,
- a separation unit (3) adapted for separating compounds of the fluid,
- a computer (5) adapted for controlling said fluid separation system,
- a system of claim 7 or any one of the above claims, adapted for recording status information of said fluid separation system.
